(19)

**Europäisches Patentamt**
**European Patent Office**
**Office européen des brevets**

(11) **EP 4 685 745 A1**

(12) **EUROPEAN PATENT APPLICATION**

(43) Date of publication:
    **28.01.2026 Bulletin 2026/05**

(21) Application number: **25190595.6**

(22) Date of filing: **21.07.2025**

(51) International Patent Classification (IPC):
    **G06T 7/33** $^{(2017.01)}$   **G06T 7/35** $^{(2017.01)}$

(52) Cooperative Patent Classification (CPC):
    **G06T 7/33; G06T 7/35;** G06T 2207/20021;
    G06T 2207/30201

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH LA MA MD TN**

(30) Priority: **25.07.2024 US 202463675574 P**
    **24.06.2025 US 202519247114**

(71) Applicant: **INTEL Corporation**
    **Santa Clara, CA 95054 (US)**

(72) Inventor: **Elron, Noam**
    **6813657 Tel Aviv TA (IL)**

(74) Representative: **Samson & Partner Patentanwälte**
    **mbB**
    **Widenmayerstraße 6**
    **80538 München (DE)**

(54) **SEMI-RANDOM MEMORY RETRIEVAL FOR IMAGE REGISTRATION BASED ON K-MEANS**

(57)     Systems and methods are provided for image registration, which is used in video noise reduction and other multi-frame processing applications, such as remote sensing, medical imaging, and computer vision. Image registration can include geometrically transforming a current image to align with a reference image, ensuring that objects, patterns, and/or features in the images appear in the same spatial location. Memory is accessed for image retrieval for mapping pixels in the main image to corresponding pixels in a reference image.

To minimize overhead in memory-bandwidth and achieve a high retrieval rate, the two-dimensional plane is split into vertical stripes, and, for each vertical stripe, an independent one-dimensional fetch-mechanism is formulated based on tracking two clusters of source-pixels using a simplified K-means algorithm. Using two clusters of source pixels enables fetching pixels from across discontinuities in the motion-field The systems and methods allow for power-efficient multi-frame processing and high-quality video noise reduction.

FIG. 6

**Description**

This application is related to and claims the benefit of priority under 35 U.S.C. §119(e) to U.S. Provisional Application No. 63/675,574 titled "SEMI-RANDOM MEMORY RETRIEVAL FOR IMAGE REGISTRATION BASED ON K-MEANS" filed on July 25, 2024, which is hereby incorporated by reference in its entirety.

Technical Field

This disclosure relates generally to image processing, and more specifically, to memory access for image registration.

Background

Image registration is often used in image processing to align different sets of data. Aligning different sets of image data can include warping an image to line up with a similar image. The different sets of image data can be consecutive frames of image data in a video sequence, and the different sets of image data can be images from two sensors on the same device. Warping image data can include geometrically transforming a source image to align with a target image, and entails fetching the image pixels from memory in an irregular ordering.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example DNN, in accordance with various embodiments.
FIGS. 2A-2C illustrate example image frames including consecutive frames from two video sequences and the optical flows, in accordance with various embodiments.
FIGS. 3A-3C illustrate example image frames including consecutive frames from two video sequences and the optical flows, in accordance with various embodiments
FIG. 4 is a block diagram of a multi-frame processing pipeline 400, in accordance with various embodiments.
FIG. 5A illustrates a reference image divided vertically into sections, in accordance with various embodiments.
FIG. 5B shows a magnified portion of FIG. 5A, in accordance with various embodiments.
FIG. 6 is a flow chart of an example method for image registration with irregular memory access, in accordance with various embodiments.
FIG. 7 is a flow chart of an example method for retrieving pixels of a reference image during image registration, in accordance with various embodiments.
FIG. 8 is a block diagram of an example computing device, in accordance with various embodiments.

Detailed Description

*Overview*

Image registration is the operation of taking two similar images (e.g., two consecutive frames in a video sequence) and warping one of the images such that the objects in the images line up and thus spatial correspondence between the images is achieved. Image registration is a step in modern high-quality video noise reduction and in many other applications that rely on multi-frame processing, such as remote sensing, medical imaging, and computer vision. Image registration often includes geometrically transforming a current image to align with a reference image, ensuring that objects, patterns, and/or features in the images appear in the same spatial location. Aligning consecutive frames in a video sequence enables smoother transitions and better quality in multi-frame processing.

The mapping between each pixel in the main image and the corresponding pixel in the reference image is known as optical flow or motion field. Traditionally, random-access techniques are based on reading small two-dimensional blocks of the image into an internal cache, and performing image warping on the data in the internal cache. However, these techniques have a high memory bandwidth overhead and are not able to retrieve all the required pixels. Additionally, processing the image after fetching image blocks using these techniques is inefficient.

The systems and methods discussed herein retrieve a larger percentage of the image pixels than other techniques, while keeping the memory-bandwidth overhead minimal. In particular, systems and methods are provided for efficiently accessing memory for image retrieval for mapping pixels in the main image to corresponding pixels in a reference image. By dividing the image into multiple sections, the memory access methods include a high retrieval rate with a low overhead in memory-bandwidth. In some implementations, the two-dimensional plane is split into multiple narrow vertical stripes, and, for each vertical stripe, an independent one-dimensional fetch-mechanism is formulated. The fetch mechanism is based on tracking two clusters of source-pixels using a simplified K-means algorithm. Using two clusters of source pixels enables fetching pixels from across discontinuities in the motion-field. The systems and methods allow for power-efficient multi-frame processing and high-quality video noise reduction.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or CNN accelerator that comprises a list of elements is not necessarily limited to only those elements but may include other elements not expressly listed or inherent to such method, process, device, or CNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

## *Example DNN System*

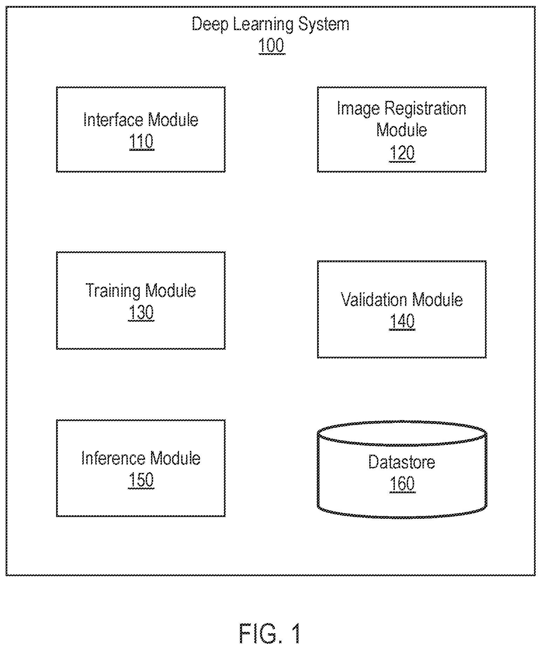

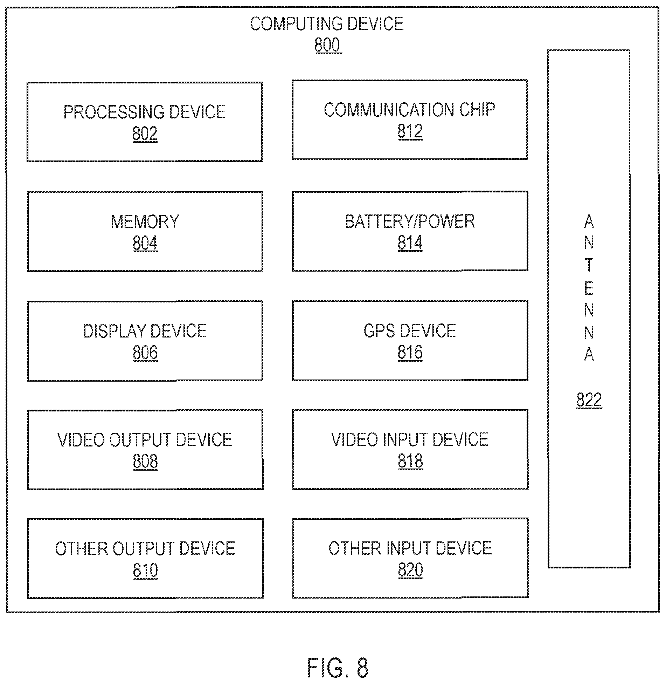

FIG. 1 is a block diagram of an example deep learning system 100, in accordance with various embodiments. The deep learning system 100 includes an image registration module 120, which can be used for image registration, image retrieval, multi-frame processing, to improve image quality, and perform other image processing techniques. In some examples, the image registration module 120 performs memory access for image registration as described herein. In some examples, the deep learning system 100 trains deep neural networks (DNNs) for various tasks, including image processing and scene understanding. The deep learning system 100 includes an interface module 110, an image registration module 120, a training module 130, a validation module 140, an inference module 150, and a datastore 160. In other embodiments, alternative configurations, different or additional components may be included in the deep learning system 100. Further, functionality attributed to a component of the deep learning system 100 may be accomplished by a different component included in the deep learning system 100 or a different system. The deep learning system 100 or a component of the deep learning system 100 (e.g., the training module 130 or inference module 150) may include the computing device 800 in FIG. 8.

The interface module 110 facilitates communications of the deep learning system 100 with other systems. As an example, the interface module 110 supports the deep learning system 100 to distribute trained DNNs to other systems, e.g., computing devices configured to apply DNNs to perform tasks. As another example, the interface module 110 establishes communications between the deep learning system 100 with an external database to receive data that can be used to train DNNs or input into DNNs to perform tasks. In some embodiments, data received by the interface module 110 may have a data structure, such as a matrix. In some embodiments, data received by the interface module 110 may be an image, a series of images, and/or a video stream.

In various examples, as described herein, the image registration module 120 includes one or more neural networks for processing input images. In some examples, the image registration module 120 includes one or more deep neural networks (DNN) for processing input images. In some examples, the image registration module 120 processes streams of input image frames using the image registration techniques described herein. The training module 130 trains DNNs using training datasets. In some embodiments, a training dataset for training a DNN may include one or more images and/or videos, each of which may be a training sample. In some examples, the training module 130 trains the image registration module 120. The training module 130 may receive real-world video data for processing with the image registration module 120 as described herein. In some embodiments, the training module 130 may input different data into different layers of the DNN. For every subsequent DNN layer, the input data may be less than the previous DNN layer. The training module 130 may adjust internal parameters of the DNN to minimize a difference between training data output and the video processed by the image registration module 120. In some examples, the difference can be the different between corresponding output frames in the video processed by the image registration module 120 and the training data. In some examples, the difference between corresponding output frames can be measured as the number of pixels in the corresponding output frames that are different from each other.

In some embodiments, a part of the training dataset may be used to initially train the DNN, and the rest of the training dataset may be held back as a validation subset used by the validation module 140 to validate performance of a trained DNN. The portion of the training dataset not including the tuning subset and the validation subset may be used to train the DNN.

The training module 130 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 130 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the DNN, the training module 130 inputs a training dataset into the DNN. The training dataset includes a plurality of training samples. An example of a training dataset includes a series of images of a video stream. Unlabeled, real-world video is input to the image processor, and processed using the image registration parameters of the DNN to produce model-generated outputs. The training module 130 modifies the parameters inside the DNN ("internal parameters of the DNN"). The internal parameters include weights of filters in the convolutional layers of the DNN.

The training module 130 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the DNN. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the DNN. In one embodiment, the training module 130 may iteratively re-train the DNN until the occurrence of a stopping condition, such as the accuracy measurement indication that the DNN may be sufficiently accurate, or a number of training rounds having taken place.

The inference module 150 applies the trained or validated DNN to perform tasks. The inference module 150 may run inference processes of a trained or validated DNN. The inference module 150 may input real-world data into the DNN and receive an output of the DNN. The output of the DNN may provide a solution to the task for which the DNN is trained for. In various examples, small scale input (e.g., a small scale image) can save a large number of computations during inference.

The inference module 150 may aggregate the outputs of the DNN to generate a final result of the inference process. In some embodiments, the inference module 150 may distribute the DNN to other systems, e.g., computing devices in communication with the deep learning system 100, for the other systems to apply the DNN to perform the tasks. The distribution of the DNN may be done through the interface module 110. In some embodiments, the deep learning system 100 may be implemented in a server, such as a cloud server, an edge service, and so on. The computing devices may be connected to the deep learning system 100 through a network. Examples of the computing devices include edge devices.

The datastore 160 stores data received, generated, used, or otherwise associated with the deep learning system 100. For example, the datastore 160 stores video processed by the image processor 120 or used by the training module 130, validation module 140, and the inference module 150. The datastore 160 may also store other data generated by the training module 130 and validation module 140, such as the hyperparameters for training DNNs, internal parameters of trained DNNs (e.g., values of tunable parameters of activation functions, such as Fractional Adaptive Linear Units (FALUs)), etc. In the embodiment of FIG. 1, the datastore 160 is a component of the deep learning system 100. In other embodiments, the datastore 160 may be external to the deep learning system 100 and communicate with the deep learning system 100 through a network.

### *Example Image Processing System*

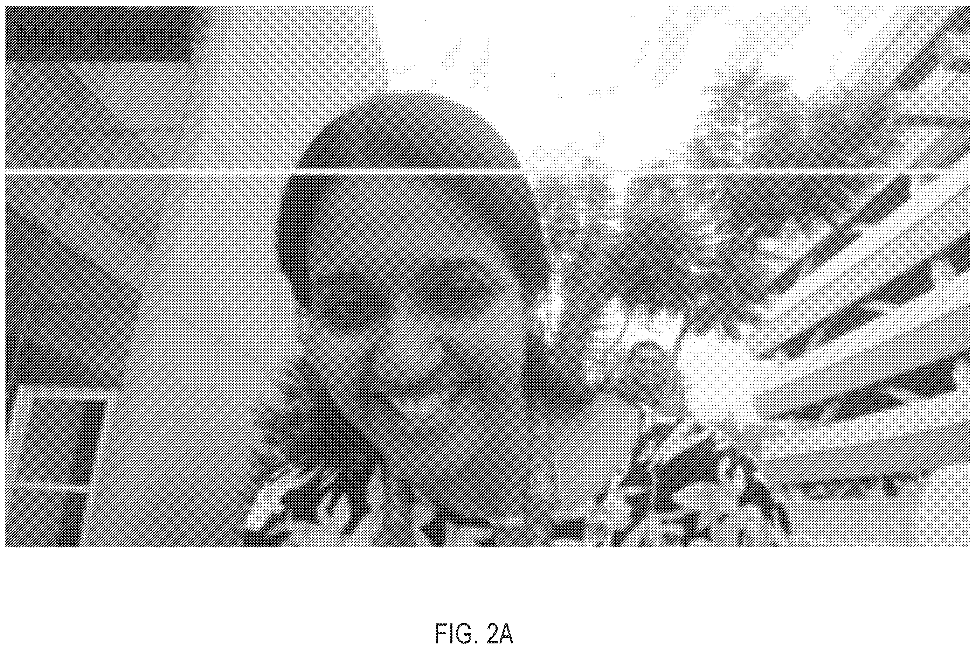

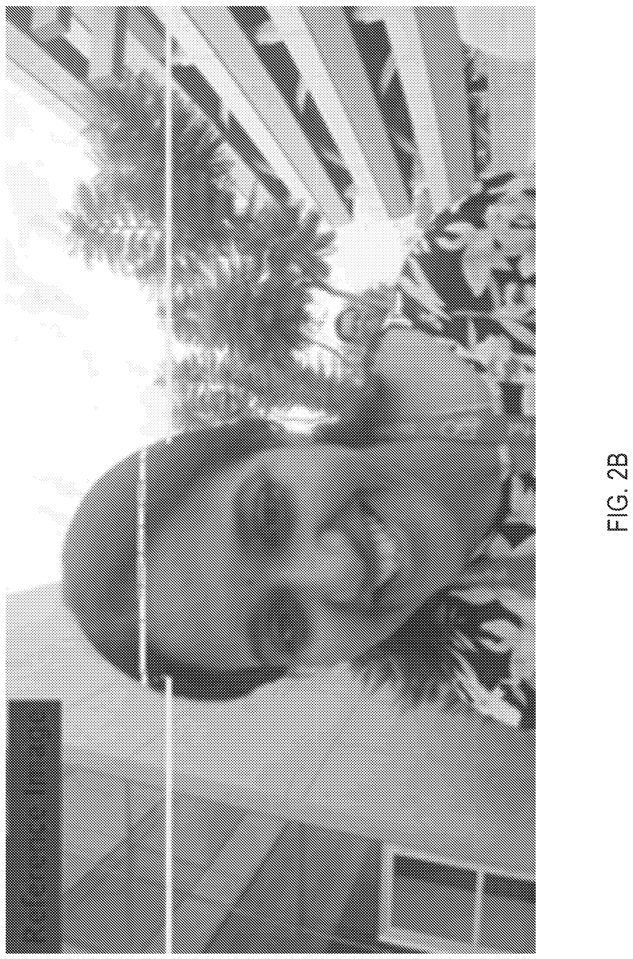

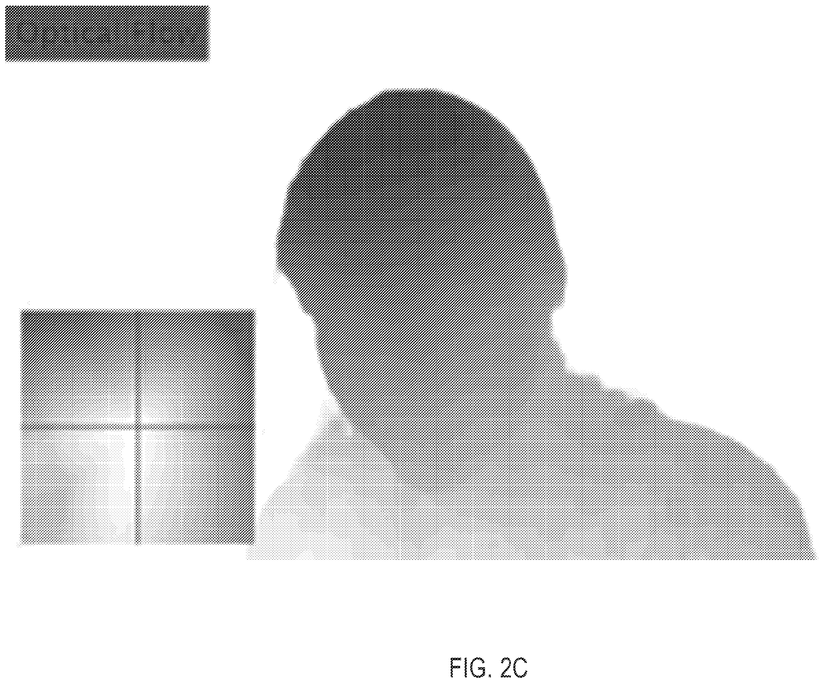

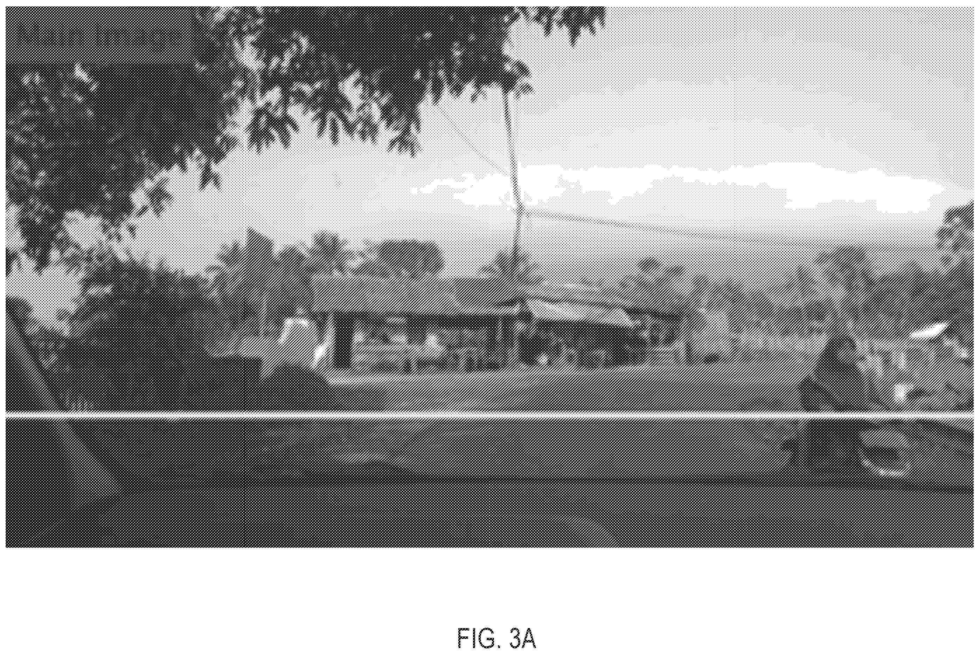

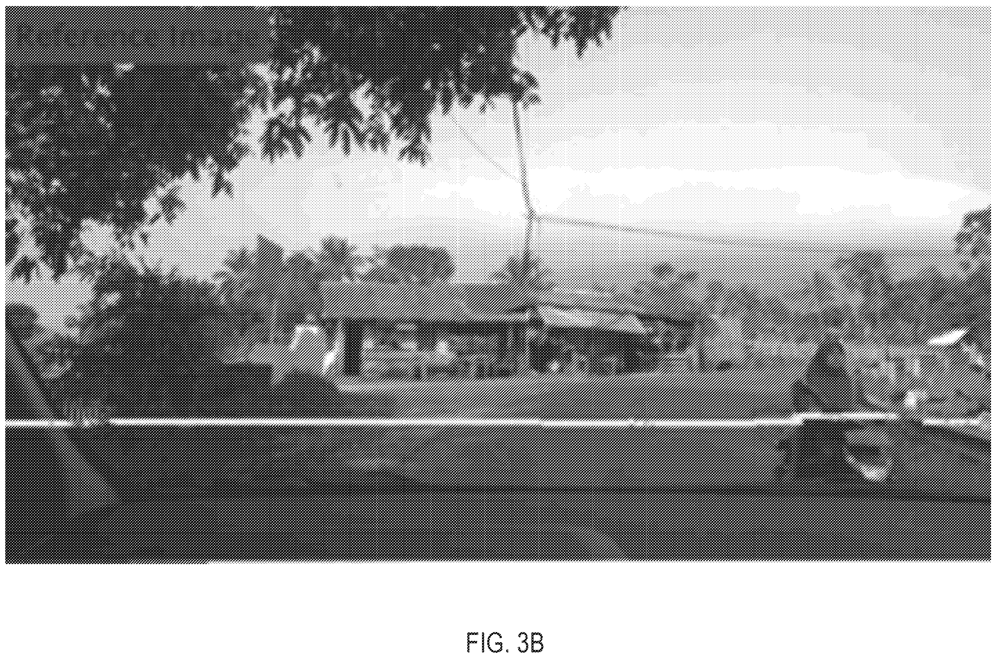

FIGS. 2A-2C and 3A-3C illustrate example image frames including consecutive frames from two video sequences and the optical flows, in accordance with various embodiments. In FIGS. 2A-2B, the background is still, and the people are moving. In particular, the image of FIG. 2A is a main image and the image of FIG. 2B is a reference image. When comparing the main image to the reference image, the people have moved. When lining up the two images for image registration, the parts of the reference image including the people are retrieved in an irregular pattern to line them up with the main image. FIG. 2C illustrates the optical flow from the main image to the reference image. In various examples, the optical flow image of FIG. 2C can be a color image in which white elements represent static portions of the main image (with respect to the reference image), and the color encodes the direction of motion between the main image and the reference image. The horizontal lines in the main image are mapped to irregular manifold in the reference image.

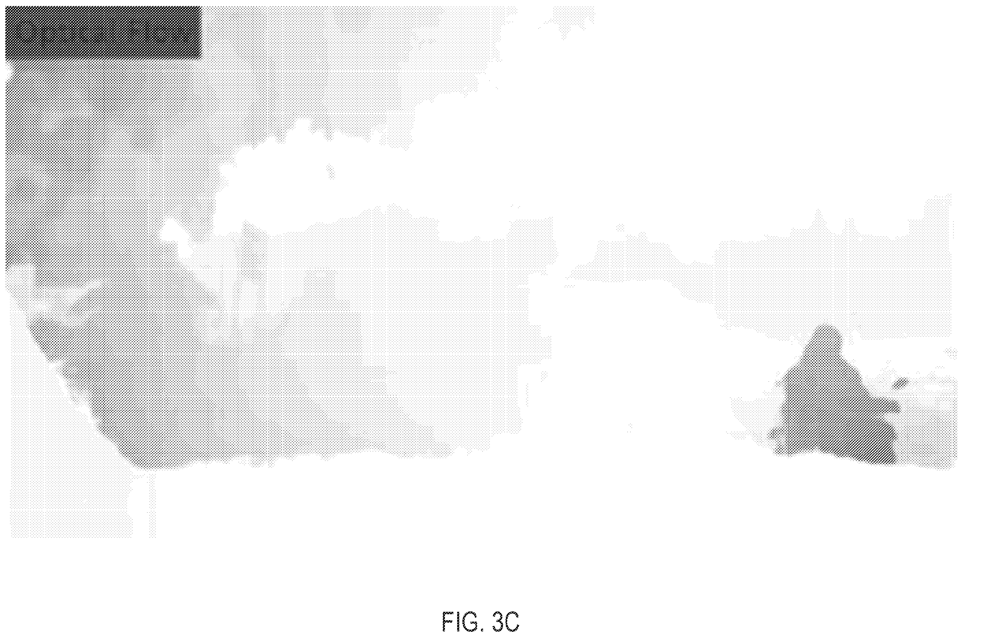

In FIGS. 3A-3B, the images are captured from a moving vehicle, and the entire view is in motion. When comparing the main image to the reference image, the entire image frame has moved, with the person on the scooter having moved slightly more than other parts of the image. FIG. 3C illustrates the optical flow from the main image to the reference image. In various examples, the optical flow image of FIG. 3C can be a color image in which static elements are encoded in white and various colors encode the direction of motion. Horizontal lines in the main images are mapped to irregular manifolds in the references (in yellow). The horizontal lines in the main image are mapped to irregular manifold in the reference image.

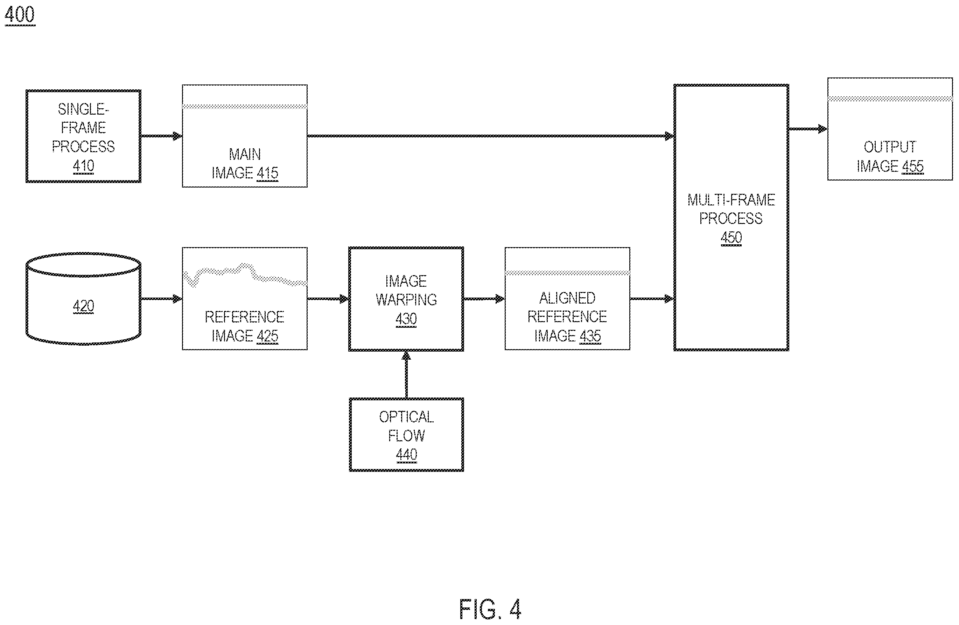

FIG. 4 is a block diagram of a multi-frame processing pipeline 400, in accordance with various embodiments. A main image 415 from a sequence of frames is received from a single frame process 410. The reference image 425 (e.g., the previous frame in a video sequence) is retrieved from memory 420 in an irregular pattern in order to generate an aligned reference image 435. In particular, the aligned reference image 435 is provided in row raster ordering, and thus the row rasters of the reference image 425 are retrieved from memory 420 in order to align with the main image 415. An image warping module 430 and an optical flow module 440 generate the aligned reference image from the reference image 425. Modern image resolutions are very high (2-12 mega-pixels), and at each moment only a fraction of the image is stored in local memory inside the image-processing hardware (due to die-area cost of the internal memory). Due to the irregular mapping between the main image 415 and a reference image 425, the reference image 425 is accessed in an irregular pattern. Thus, real-time image processing operating in raster scan (i.e., the images are fed into the processing engine several rows at a time from top to bottom) accesses the rows as the rows align with the main image 415. Due to the irregular mapping between the main image 415 and a reference image 425, the reference image 425 is accessed in an irregular pattern such that the aligned reference image 435 is available in row order. At a multi-frame processing module 450, the main image 415 is processed with the aligned reference image 435 to generate the output image 455. In traditional systems, the majority of the reference image pixels are fetched to the internal memory, and hence the retrieval rate for the processing batch is high.

*Example System for Image Registration with Irregular Memory Access*

According to various implementations, a system for image registration is provided that minimizes internal memory and therefore minimizes die area, minimizes the number of pixels that are read multiple times and thereby minimizes power consumption, and maximizes the number of pixels accurately retrieved and thereby maximizes image registration accuracy.

In various examples, read overhead is memory access divided by frame-resolution. Irregular memory access may involve accessing parts of the reference image more than once, and reading from memory consumes a large amount of system resources, especially power. Systems and methods are provided to minimize read overhead by minimizing the number of pixels that are read multiple times.

In some examples, retrieval rate represents the number of pixels successfully retrieved divided by the frame resolution. Some irregular retrieval mechanisms are unable to retrieve all the pixels of the reference image. Systems and methods are provided to maximize the retrieval-rate. In particular, the systems and methods maintain a retrieval rate close to 100% while retrieving pixels from multiple distance locations at the same time, and also keeping the read overhead low and using a relatively small amount of internal memory.

According to various implementations, systems and methods for image registration include splitting the reference image into multiple vertical stripes, and allocating two small chunks of internal memory to each stripe. The chunks of internal memory can be used to store source pixels from the reference image that are mapped to align the main image with the reference image. In various example, a reference image has an image frame resolution H $\times$ W, and the reference image is stored in an external memory (e.g., memory 420). An aligned reference image is generated in $B$ batches of $R$ consecutive rows (such that $B \times R = H$). The $B$ batches of $R$ consecutive rows are processed at a multi-frame processing module (e.g. multi-frame processing module 450 of FIG. 4). The reference image is accessed in the external memory 420 using a semi-random technique and regions of the reference image are stored in a small internal memory. The image sections stored in the internal memory are used to produce the pixels of the aligned image through interpolation.

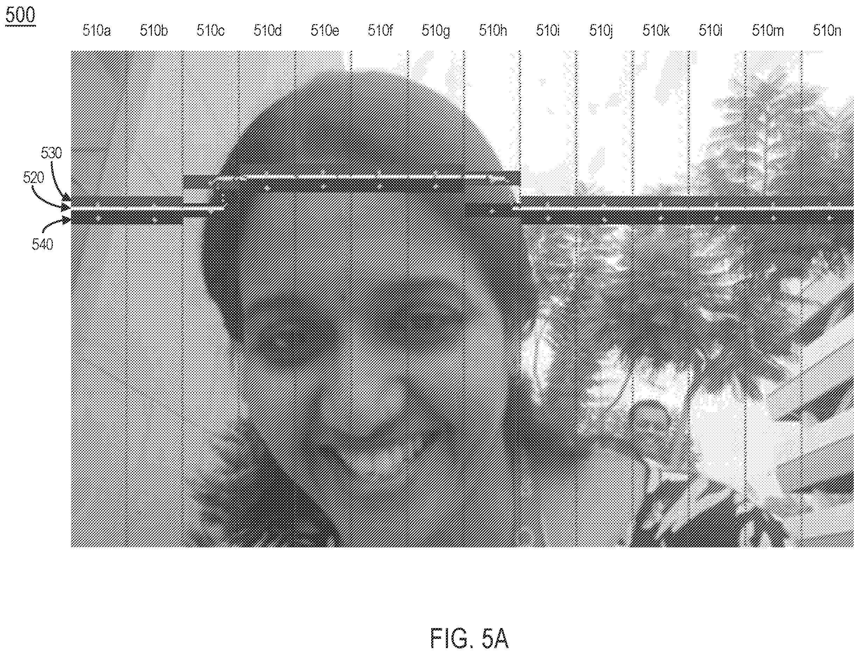

FIG. 5A illustrates the reference image from FIG. 2B divided vertically into sections 510a-510n (together referred to as vertical sections 510), in accordance with various embodiments. According to various implementations, each vertical section 510a-510n can be managed independently. Although the image 500 of FIG. 5A includes 14 vertical sections, in various embodiments, a reference image can be divided into any selected number of vertical sections 510. Within each vertical section 510, a selected section of pixels 520 is used for image registration. The selected section of pixels 520 used for image registration is shown as a light-colored stripe in each vertical section 510. Additionally, within each vertical section 510, two chunks of the vertical section are retrieved from the external memory and stored in the internal memory. Each chunk includes multiple rows of pixels within its corresponding vertical section 510. In various examples, the pixels stored in each chunk are source pixels used for image registration.

In various implementations, the reference image is split into S vertical sections 510, with each vertical section 510 having a width $K$, such that $K = W/S$. In general, in each vertical section 510, the vertical locations of the source pixels 530, 540 are concentrated in one or two clusters. Thus, for each stripe, two small chunks of internal memory are allocated, each capable of holding $N \times K$ pixels, where $N$ = the number of lines of the stripe width included in the source pixels 530, 540 for each cluster. Thus, the total size of the internal memory is $2 \times N \times W$ pixels, since there are two clusters of $N$ lines of pixels in each vertical section 510 across the width W of the image. In some examples, the source pixels 530, 540 each includes around twelve rows of pixels in the vertical section 510, and thus $N \sim 12$, and the size of the internal memory is about 24 image-lines across the width of the image.

Before processing an image for image registration, the content of the internal memory is updated, tracking the manifold of source pixels in the reference image, and ensuring the source pixels are available for image registration. The tracking process, as described in greater detail below, maximizes retrieval while keeping the read-rate low.

## Systems and Methods for Tracking Source-Pixels

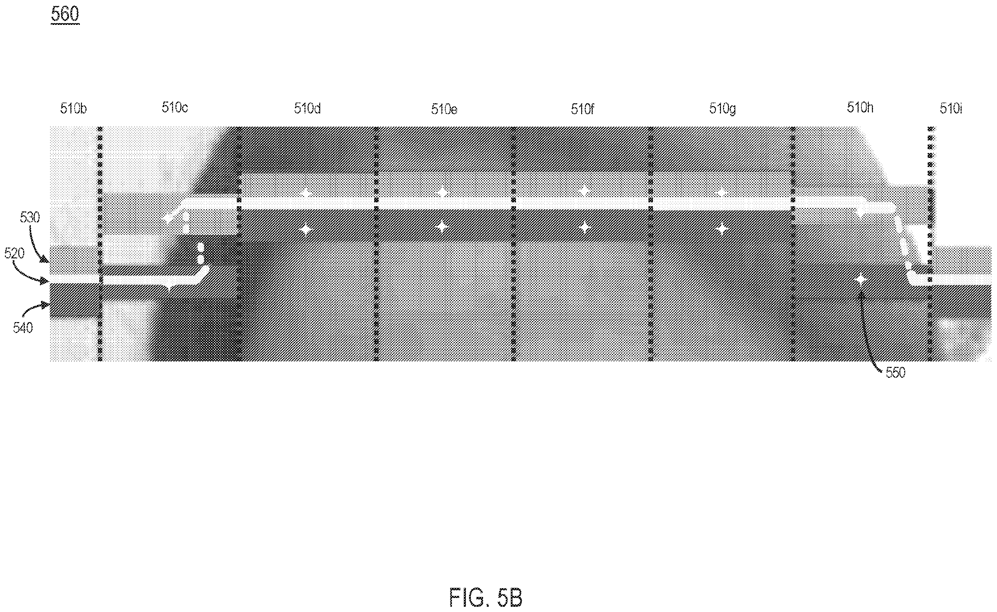

According to various implementations, for each vertical stripe 510, two clusters of source-pixels are tracked using a simplified K-means algorithm. FIG. 5B shows a magnified portion of FIG. 5A, focusing on the source pixels groups 530, 540, in accordance with various embodiments. Each source pixel group 530, 540, includes a centroid 550, as illustrated with the label in the vertical section 510h. For each new batch of output rows, one iteration of the algorithm is used. Note that for each vertical section 510, the motion of the source pixel groups 530, 540 is vertical. Thus, for each vertical section 510, the tacking is one-dimensional.

In various examples, after outputting lines ($l$ - $R$, $l$ - 1), the centroids 550 of a selected vertical section $k$ are $\left\{ \left\{ c_{top}^{k}, c_{bot}^{k} \right\} \right.$ (vertical coordinates), where $c_{top}^{k}$ represents the centroid in the top source pixel group 530, and $c_{bot}^{k}$ represents the centroid in the bottom source pixel group 540. The content of the internal memory is updated prior to processing the next batch of R output lines ($l$, $l$ + $R$ - 1). The memory-fetch instructions are based on the updated locations of the centroids. In some examples, a method for to tracking source pixel clusters can include a number of determinations.

In various examples, for each vertical section 510, both centroids (the centroid in the top source pixel group 530 and the centroid in the bottom source pixel group 540) are advanced by R, and the update for a simple motion-field is:

$$c_{top}^{k} \leftarrow c_{top}^{k} + R$$

$$c_{bot}^{k} \leftarrow c_{bot}^{k} + R$$

For each pixel in the processing batch of R output lines, using the motion field, the vertical section $k$ is determined and the vertical source coordinate $y_{src}$ is determined. The pixel is assigned to either the top source pixel group 530 of the respective vertical section k or the bottom source pixel group 540 of the respective vertical section k, wherein assigning the pixel to a source pixel group 530, 540 includes identifying the centroid 550 within the respective vertical section k that is closest to the pixel, as represented by the following equation:

$$\text{argmin}\{ |y_{src} - c_{top}^{k}|, \ |y_{src} - c_{bot}^{k}| \}$$

For each vertical section 510, the new values of the centroids 550 are the mean vertical coordinate of the pixels assigned to the vertical section 510 and the source pixel group 530, 540:

$$c_{top}^{k} \leftarrow \sum_{\substack{pixels\ in\ vertical \\ section\ k\ and \\ top\ source\ pixel\ group}} y_{src} \Big/ \begin{array}{c} number\ of\ pixels\ in\ vertical\ section\ k \\ and\ top\ source\ pixel\ group \end{array}$$

$$c_{bot}^{k} \leftarrow \sum_{\substack{pixels\ in\ vertical \\ section\ k\ and \\ bottom\ source\ pixel\ group}} y_{src} \Big/ \begin{array}{c} number\ of\ pixels\ in\ vertical\ section\ k \\ and\ bottom\ source\ pixel\ group \end{array}$$

For each vertical section 510, when the centroids 550 are closer than the source pixel group height $N$, separate the centroids 550 such that a distance between the centroids 550 is *N* pixels apart:

$$d \leftarrow \max\{N - |c_{bot}^k - c_{top}^k|, 0\}$$

$$c_{top}^k \leftarrow c_{top}^k - d/2$$

$$c_{bot}^k \leftarrow c_{bot}^k + d/2$$

*Updating the Internal Memory*

In various implementations, as discussed above, the internal memory allocated to storing source pixels of the reference image is very limited. Thus, for each processing batch of R lines of pixels, the source pixels are around R lines below the sources of the previous bath of the pixels and the centroids and fetched memory chunks roll down the vertical section 510. When rolling down the vertical section 510, the new lines are fetched from the external memory. Thus, when rolling down R lines, there is no read overhead since one pixel is fetched from external memory for each pixel that is processed. Because the source pixels in each vertical section 510 are generally concentrated in one cluster, the memory chunk can roll down together, transferring pixels between memory chunks internally and not contributing to the read overhead.

When a vertical section 510 includes a discontinuity of the motion-field (e.g., a foreground object traveling to the right while the background is traveling to the left), the source pixels may split into two clusters. In this scenario, the memory chunks may split to cover both clusters, and/or the memory chunks may "jump" to a new vertical location. While a jump to a new vertical location can result in additional read overhead, discontinuities in the motion field are relatively rare, and therefore the overall overhead remains minimal.

In various implementations, one example protocol for fetching pixels from external memory to internal memory includes several determinations. When a source pixel group is moved, the pixels of the new source pixel group are fetched from external memory. The source pixels fetched from external memory can depend on the location of the updated centroid. In particular, if the updated centroid is above the center of the source pixel group but still inside the source pixel group, no pixels are fetched from external memory. If the updated centroid is slightly below the center of the source pixel group, the source pixel group selections are rolled down so that the center of the source pixel group aligns with the centroid, and the new rows (within the vertical segment) of source pixels are fetched from external memory. If the updated centroid is not within the source pixel group, then the entire source pixel group is rolled down so that the center of the source pixel group is at the updated centroid, and the entire source pixel group is fetched from external memory. Note that when both source pixel groups roll down together, pixels can be transferred between the source pixel groups internally without rereading from the external memory.

In various implementations, when image registration is performed using the systems and methods provided herein, the retrieval rate for most frames is close to one. In a small number of frames, which have a very irregular motion-field with extensive boundaries, the retrieval rate increases. Additionally, for the vast majority of frames, the number of times each pixel is fetched from the external memory remains below 1.15. The retrieval rate very rarely exceeds 1.15.

In some implementations, the method operates on batches of R lines, where each line includes a row across the vertical segments (e.g., vertical segments 510). In some implementations, the method can operate on rows from a selected number of vertical segments at a time rather than image rows across the entire image, such that the batches can be line (or row) fragments. For example, the method can operate on one or more rows from one vertical segment at a time, one or more rows from two vertical segments at a time, one or more rows from three vertical segments at a time, one or more rows from four vertical segments at a time, one or more rows from five vertical segments at a time, one or more rows from more than five vertical segments at a time, and/or on one or more rows from less than all the vertical segments at a time.

In some implementations, the image registration systems and methods operate on an image frame that includes information that does not appear in the reference frame due to occlusions or changes to the field-of-view (e.g., camera panning). For these pixels the motion field points to an invalid source location in the reference image. In various examples, pixels including information that does not appear in the reference frame are referred to as invalid pixels. In some examples, the invalid pixels, as supplied by a motion field, can be marked as having a low retrieval confidence. Then, for each vertical section 510, when a group of source pixels includes invalid pixels, when the centroid is updated, the new value of the centroid 550 can be reformulated as a weighted average, where the retrieval confidence is the weight. Thus, the centroid update can be determined as follows:

$$c_{top}^{k} \leftarrow \sum_{\substack{\text{pixels in stripe } k \\ \text{and top cluster}}} \text{conf} \cdot y_{src} \Bigg/ \sum_{\substack{\text{pixels in stripe } k \\ \text{and top cluster}}} \text{conf}$$

$$c_{bot}^{k} \leftarrow \sum_{\substack{\text{pixels in stripe } k \\ \text{and bottom cluster}}} \text{conf} \cdot y_{src} \Bigg/ \sum_{\substack{\text{pixels in stripe } k \\ \text{and bottom cluster}}} \text{conf}$$

According to various implementations, when there are invalid pixels, the registration algorithm does not attempt to retrieve pixels that are invalid. Thus, the registration algorithm maintains its efficiency, increasing the retrieval rate of valid pixels while reducing the overall read-overhead.

_Method for Image Registration with Irregular Memory Access_

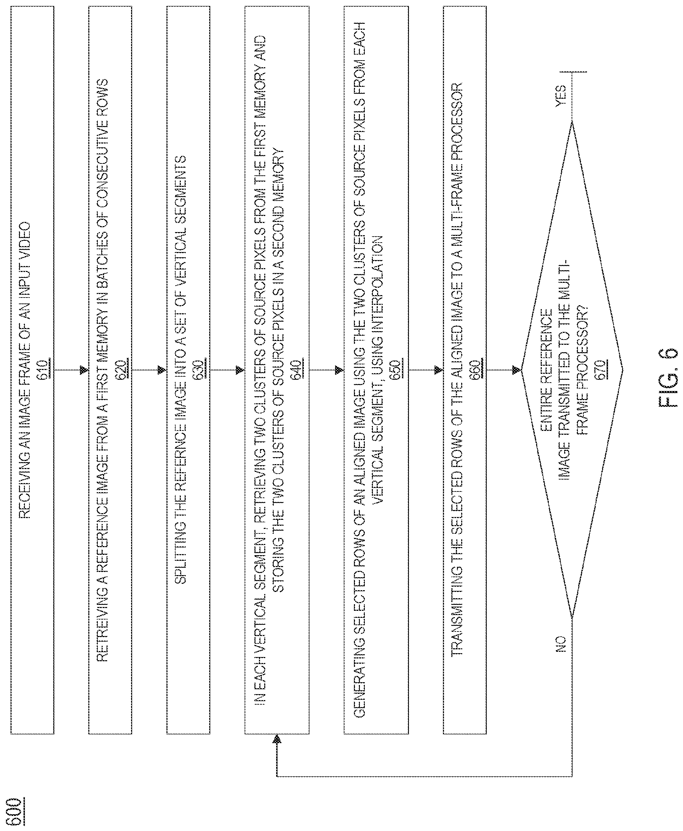

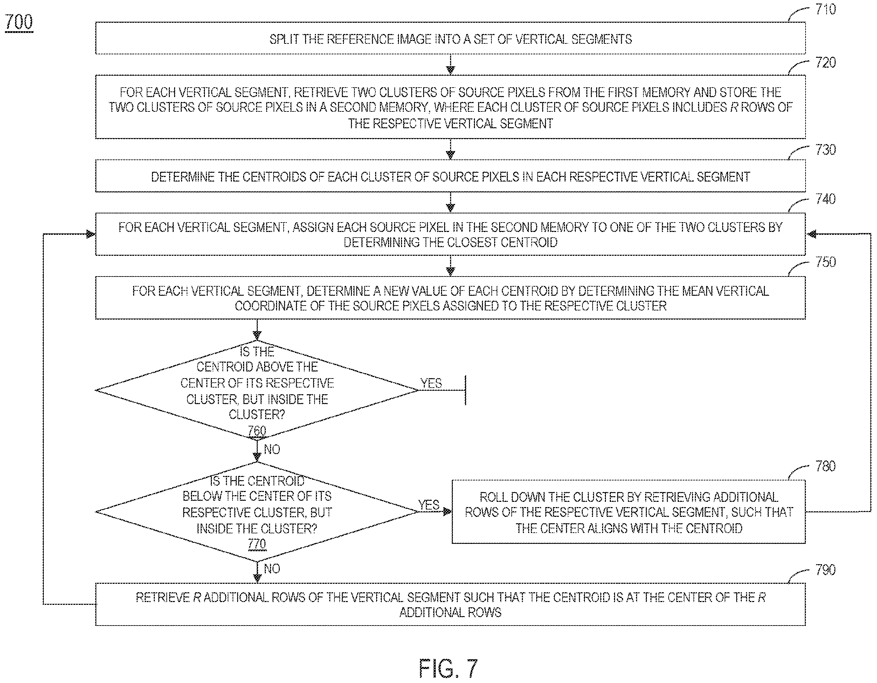

FIG. 6 is a flow chart of an example method 600 for image registration with irregular memory access, in accordance with various embodiments. FIG. 7 is a flow chart of an example method 700 for retrieving pixels of a reference image during image registration, in accordance with various embodiments. Although the methods 600, 700 are described with reference to the flowcharts illustrated in FIGS. 6 and 7, many other methods for image registration may alternatively be used. For example, the order of execution of the elements in FIGS. 6 and 7 may be changed. As another example, some of the steps may be changed, eliminated, or combined. In various examples, the methods 600, 700 can be implemented by an image registration module, such as the image registration module 120of FIG. 1, and/or a multi-frame processing pipeline such as the multi-frame processing pipeline 400 of FIG. 4.

Referring to FIG. 6, at 610, an image frame is received. The image frame can be an image frame in a sequence of image frames, such as an image from a video and/or "live" photo. At 620, a reference image is retrieved, where the reference image is a previous image frame in the sequence of image frames. At 630, the reference image is divided into vertical segments. In various examples, the reference image can be divided into k vertical segments. In some examples, each vertical segment _k_ has an equal width. In some examples, one or more vertical segments _k_ has a different width from other vertical segments. Together, the _k_ vertical segments have a width _W_, where _W_ is the width of the image frame.

At 640, two groups of source pixels are retrieved from each vertical segment. The groups of source pixels are retrieved as described above and as described with respect to FIG. 7. The groups of source pixels are retrieved from a first memory and stored in a second memory. In some examples, the first memory is an external memory and the second memory is an internal memory. In various examples, the vertical locations of the groups of source pixels in each vertical segment are determined such that the groups of source pixels in the reference image frame align with corresponding source pixels in the current image frame. At 650, aligned rows of the reference image are generated using the two clusters of source pixels from each vertical segment, where the aligned rows align with the current image frame. The aligned rows of the reference image are generated using interpolation.

At 660, the aligned rows of the aligned image are transmitted to a processing pipeline for joint processing with the current image. In particular, corresponding rows of the current image are also transmitted to the processing pipeline, and the aligned rows of the aligned image are processed with the corresponding rows of the current image. In some examples, the aligned rows of the aligned image and the corresponding rows of the current image are received at a multi-frame processing module. Thus, the multi-frame processing module processes rows of the current image and aligned image as they are received. At 670, it is determined whether all rows of the reference image have been retrieved and aligned with the current image frame and transmitted to the multi-frame processing module. If there are additional image rows of the reference image that have not yet been retrieved, the method 600 returns to 640 to retrieve additional groups of source pixels from each vertical segment from the first memory. If there are no additional image rows for processing, the multi-frame processing module aligns the current image frame with the aligned reference image and can then perform image processing on the current image to generate an output image.

FIG. 7 is a flow chart of an example method 700 for retrieving pixels of a reference image during image registration, in accordance with various embodiments. At 710, the reference image is split into a set of k vertical segments, as described above. At 720, for each vertical segment, two clusters of source pixels are retrieved from the first memory and stored in a second memory. Each cluster of source pixels includes _R_ rows of the respective vertical segment. At 730, the centroid of each cluster of source pixels in each respective vertical segment is determined. In various examples, the centroid represents the alignment between the retrieved cluster of source pixels and the corresponding source pixels in the current image frame. At 740, for each vertical segment, each source pixel in the second memory is assigned to one of the two clusters by determining the closest centroid. In various examples, once each source pixel is assigned to one of the two clusters of source pixels, the two clusters of source pixels are transmitted to the processing pipeline (*e.g.*, the multi-frame processing module) for joint processing with the corresponding rows of the current image.

At 750, for each vertical segment, a new value of each centroid is determined by determining the mean vertical coordinate of the source pixels assigned to the respective cluster. In various examples, as described above, if the two centroids in a vertical segment are closer than the height $N$ of each cluster of source pixels (where the height is the number of rows of source pixels in each cluster), then the centroids are separated such that the distance between the centroids is $N$ pixels, as described above with respect to FIGS. 5A-5B.

For each vertical segment, the vertical position of the centroid of each cluster, with respect to its corresponding cluster, is determined. At 760, it is determined whether the centroid in each cluster is above the vertical center of its respective cluster but inside its respective cluster. If yes, then no action is taken, and, for that particular cluster of source pixels, the cluster of source pixels retrieved to the second memory will remain the same when the next rows of pixels of the reference image are retrieved from the first memory.

At 760, if the centroid in the respective cluster is not above the vertical center of its respective cluster, at 770 it is determined whether the centroid in the respective cluster is below the center of its respective cluster but still within the cluster. If the centroid in the respective cluster is below the center of its respective cluster but still within the cluster, at 780, the cluster of source pixels is rolled down its respective vertical segment and additional rows of the respective vertical segment such that the new vertical center of the cluster of source pixels aligns with the centroid. The method 700 returns to step 740 and assigns the retrieved source pixels to respective clusters.

If the centroid in the respective cluster is below the center of its respective cluster and no longer within the cluster, at 790, R additional rows of the vertical segment are retrieved from the first memory to the second memory, such that the centroid is at the center of the R additional rows. The method 700 returns to step 740 and assigns the retrieved source pixels to respective clusters.

*Example Computing Device*

FIG. 8 is a block diagram of an example computing device 800, in accordance with various embodiments. In some embodiments, the computing device 800 may be used for at least part of the systems in for image registration described herein. A number of components are illustrated in FIG. 8 as included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, but the computing device 800 may include interface circuitry for coupling to the one or more components. For example, the computing device 800 may not include a display device 806, but may include display device interface circuitry (e.g., a connector and driver circuitry) to which a display device 806 may be coupled. In another set of examples, the computing device 800 may not include a video input device 818 or a video output device 808, but may include video input or output device interface circuitry (e.g., connectors and supporting circuitry) to which a video input device 818 or video output device 808 may be coupled.

The computing device 800 may include a processing device 802 (e.g., one or more processing devices). The processing device 802 processes electronic data from registers and/or memory to transform that electronic data into other electronic data that may be stored in registers and/or memory. The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 804 may include memory that shares a die with the processing device 802. In some embodiments, the memory 804 includes one or more non-transitory computer-readable media storing instructions executable for speech recognition, speech transcription, and/or command detection, e.g., the method described above in conjunction with FIG. 6 or some operations performed by the DNN system 700 in FIG. 7. The instructions stored in the one or more non-transitory computer-readable media may be executed by the processing device 802.

In some embodiments, the computing device 800 may include a communication chip 812 (e.g., one or more communication chips). For example, the communication chip 812 may be configured for managing wireless communications for the transfer of data to and from the computing device 800. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 512 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 512 may operate in accordance with other wireless protocols in other embodiments. The computing device 800 may include an antenna 822 to facilitate wireless communications and/or to receive other wireless communications (such as AM or FM radio transmissions).

In some embodiments, the communication chip 812 may manage wired communications, such as electrical, optical, or any other suitable communication protocols (e.g., the Ethernet). As noted above, the communication chip 812 may include multiple communication chips. For instance, a first communication chip 812 may be dedicated to shorter-range wireless communications such as Wi-Fi or Bluetooth, and a second communication chip 812 may be dedicated to longer-range wireless communications such as global positioning system (GPS), EDGE, GPRS, CDMA, WiMAX, LTE, EV-DO, or others. In some embodiments, a first communication chip 812 may be dedicated to wireless communications, and a second communication chip 812 may be dedicated to wired communications.

The computing device 800 may include battery/power circuitry 814. The battery/power circuitry 814 may include one or more energy storage devices (e.g., batteries or capacitors) and/or circuitry for coupling components of the computing device 800 to an energy source separate from the computing device 800 (e.g., AC line power).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include a video output device 808 (or corresponding interface circuitry, as discussed above). The video output device 808 may include any device that generates an audible indicator, such as speakers, headsets, or earbuds, for example.

The computing device 800 may include a video input device 818 (or corresponding interface circuitry, as discussed above). The video input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include another output device 810 (or corresponding interface circuitry, as discussed above). Examples of the other output device 810 may include a video codec, a video codec, a printer, a wired or wireless transmitter for providing information to other devices, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 800 may be any other electronic device that processes data.

*Select Examples*

Example 1 provides a computer-implemented method, including receiving a current image frame; retrieving a reference image from a first memory, including: splitting the reference image into a set of vertical segments, and in each vertical segment, retrieving two clusters of source pixels from the first memory and storing the two clusters of source pixels in a second memory; generating, through interpolation, selected rows of an aligned image using the two clusters of source pixels from each vertical segment, where the selected rows of the aligned image are aligned with selected current image rows from the current image frame; transmitting the selected rows of the aligned image to a multi-frame processing module; transmitting the selected current image rows from the current image frame to the multi-frame processing module; and generating an output image at the multi-frame processing module.

Example 2 provides the method according to example 1, where each cluster includes a plurality of consecutive rows within the vertical segment.

Example 3 provides the method according to example 1 or 2, where the two cluster of source pixels include a top cluster and a bottom cluster, and further including, for each vertical segment, determining a top centroid for the top cluster and a bottom centroid for the bottom cluster based on an alignment of the top cluster with the current image rows and an alignment of the bottom cluster with the current image rows.

Example 4 provides the method according to example 3, further including, for each vertical segment, assigning each of the source pixels in the two clusters of source pixels to the top centroid or the bottom centroid based on the alignment.

Example 5 provides the method according to example 4, where the two clusters of source pixels of are two first clusters of source pixels, and further including, in each vertical segment, retrieving two second clusters of source pixels from the first memory, and storing the two second clusters of source pixels in the second memory.

Example 6 provides the method according to example 5, where the two second clusters of source pixels are selected based on vertical positions of the top centroid and the bottom centroid.

Example 7 provides the method according to example 6, further including updating the vertical positions of the top centroid and the bottom centroid based on an alignment of the two second clusters with next current image rows.

Example 8 provides the method according to any one of examples 1-7, where the first memory is an external memory and where the second memory is an internal memory.

Example 9 provides one or more non-transitory computer-readable media storing instructions executable to perform operations, the operations including receiving a current image frame; retrieving a reference image from a first memory, including: splitting the reference image into a set of vertical segments, and in each vertical segment, retrieving two clusters of source pixels from the first memory and storing the two clusters of source pixels in a second memory; generating, through interpolation, selected rows of an aligned image using the two clusters of source pixels from each vertical segment, where the selected rows of the aligned image are aligned with selected current image rows from the current image frame; transmitting the selected rows of the aligned image to a multi-frame processing module; transmitting the selected current image rows from the current image frame to the multi-frame processing module; and generating an output image at the multi-frame processing module.

Example 10 provides the one or more non-transitory computer-readable media according to example 9, where each cluster includes a plurality of consecutive rows within the vertical segment.

Example 11 provides the one or more non-transitory computer-readable media according to example 9 or 10, where the two cluster of source pixels include a top cluster and a bottom cluster, and the operations further including, for each vertical segment, determining a top centroid for the top cluster and a bottom centroid for the bottom cluster based on an alignment of the top cluster with the current image rows and an alignment of the bottom cluster with the current image rows.

Example 12 provides the one or more non-transitory computer-readable media according to example 11, the operations further including, for each vertical segment, assigning each of the source pixels in the two clusters of source pixels to the top centroid or the bottom centroid based on the alignment.

Example 13 provides the one or more non-transitory computer-readable media according to example 12, where the two clusters of source pixels of are two first clusters of source pixels, and further including, in each vertical segment, retrieving two second clusters of source pixels from the first memory, and storing the two second clusters of source pixels in the second memory.

Example 14 provides the one or more non-transitory computer-readable media according to example 13, where the two second clusters of source pixels are selected based on vertical positions of the top centroid and the bottom centroid.

Example 15 provides the one or more non-transitory computer-readable media according to example 14, further including updating the vertical positions of the top centroid and the bottom centroid based on an alignment of the two second clusters with next current image rows.

Example 16 provides the one or more non-transitory computer-readable media according to any one of examples 9-15, where the first memory is an external memory and where the second memory is an internal memory.

Example 17 provides an apparatus, including a computer processor for executing computer program instructions; and a non-transitory computer-readable memory storing computer program instructions executable by the computer processor to perform operations including receiving a current image frame; retrieving a reference image from a first memory, including: splitting the reference image into a set of vertical segments, and in each vertical segment, retrieving two clusters of source pixels from the first memory and storing the two clusters of source pixels in a second memory; generating, through interpolation, selected rows of an aligned image using the two clusters of source pixels from each vertical segment, where the selected rows of the aligned image are aligned with selected current image rows from the current image frame; transmitting the selected rows of the aligned image to a multi-frame processing module; transmitting the selected current image rows from the current image frame to the multi-frame processing module; and generating an output image at the multi-frame processing module.

Example 18 provides the apparatus according to example 17, where the two cluster of source pixels include a top cluster and a bottom cluster, and the operations further including, for each vertical segment, determining a top centroid for the top cluster and a bottom centroid for the bottom cluster based on an alignment of the top cluster with the current image rows and an alignment of the bottom cluster with the current image rows.

Example 19 provides the apparatus according to example 18, the operations further including, for each vertical segment, assigning each of the source pixels in the two clusters of source pixels to the top centroid or the bottom centroid based on the alignment.

Example 20 provides the apparatus according to example 19, where the two clusters of source pixels of are two first clusters of source pixels, and further including, in each vertical segment, retrieving two second clusters of source pixels from the first memory, and storing the two second clusters of source pixels in the second memory.

Example 21 provides the method according to examples 1-8, where the two clusters of source pixels of are two first clusters of source pixels, and where, after the selected rows of the aligned image are transmitted to the multi-frame processing module, retrieving the reference image from the first memory further includes, in each vertical segment, retrieving two second clusters of source pixels from the first memory, and storing the two second clusters of source pixels in the second memory.

Example 22 provides the one or more non-transitory computer-readable media according to examples 9-16, where the two clusters of source pixels of are two first clusters of source pixels, and where, after the selected rows of the aligned image are transmitted to the multi-frame processing module, retrieving the reference image from the first memory further includes, in each vertical segment, retrieving two second clusters of source pixels from the first memory, and storing the two second clusters of source pixels in the second memory.

Example 23 provides the apparatus according to examples 17-20, where the two clusters of source pixels of are two first clusters of source pixels, and where, after the selected rows of the aligned image are transmitted to the multi-frame processing module, retrieving the reference image from the first memory further includes, in each vertical segment, retrieving two second clusters of source pixels from the first memory, and storing the two second clusters of source pixels in the second memory.

The above description of illustrated implementations of the disclosure is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1.  A computer-implemented method, comprising:

    receiving a current image frame;
    retrieving a reference image from a first memory, including:

       splitting the reference image into a set of vertical segments, and
       in each vertical segment, retrieving two clusters of source pixels from the first memory and storing the two clusters of source pixels in a second memory;

    generating, through interpolation, selected rows of an aligned image using the two clusters of source pixels from each vertical segment of the reference image, wherein the selected rows of the aligned image are aligned with selected current image rows from the current image frame;
    transmitting the selected rows of the aligned image to a multi-frame processing module;
    transmitting the selected current image rows from the current image frame to the multi-frame processing module; and
    generating an output image at the multi-frame processing module.

2. The computer-implemented method according to claim 1, wherein each cluster includes a plurality of consecutive rows within a respective vertical segment.

3. The computer-implemented method according to claims 1-2, wherein the two clusters of source pixels include a top cluster and a bottom cluster, and further comprising, for each vertical segment, determining a top centroid for the top cluster and a bottom centroid for the bottom cluster based on an alignment of the top cluster with the selected current image rows and an alignment of the bottom cluster with the selected current image rows.

4. The computer-implemented method according to claim 3, further comprising, for each vertical segment, assigning each source pixel in the two clusters of source pixels to the top centroid or the bottom centroid based on the alignment.

5. The computer-implemented method according to claim 4, wherein the two clusters of source pixels of are two first clusters of source pixels, and further comprising, in each vertical segment, retrieving two second clusters of source pixels from the first memory, and storing the two second clusters of source pixels in the second memory.

6. The computer-implemented method according to claim 5, wherein the two second clusters of source pixels are selected based on vertical positions of the top centroid and the bottom centroid.

7. The computer-implemented method according to claim 6, further comprising updating the vertical positions of the top centroid and the bottom centroid based on an alignment of the two second clusters of source pixels with next current image rows.

8. The computer-implemented method according to claims 1-7, wherein the first memory is an external memory and wherein the second memory is an internal memory.

9. One or more non-transitory computer-readable media storing instructions executable to perform operations, the operations comprising:

receiving a current image frame;

retrieving a reference image from a first memory, including:

splitting the reference image into a set of vertical segments, and
in each vertical segment, retrieving two clusters of source pixels from the first memory and storing the two clusters of source pixels in a second memory;

generating, through interpolation, selected rows of an aligned image using the two clusters of source pixels from each vertical segment, wherein the selected rows of the aligned image are aligned with selected current image rows from the current image frame;
transmitting the selected rows of the aligned image to a multi-frame processing module;
transmitting the selected current image rows from the current image frame to the multi-frame processing module; and

generating an output image at the multi-frame processing module.

10. The one or more non-transitory computer-readable media according to claim 9, wherein each cluster includes a plurality of consecutive rows within a respective vertical segment.

11. The one or more non-transitory computer-readable media according to claims 9-10, wherein the two clusters of source pixels include a top cluster and a bottom cluster, and the operations further comprising, for each vertical segment, determining a top centroid for the top cluster and a bottom centroid for the bottom cluster based on an alignment of the top cluster with the selected current image rows and an alignment of the bottom cluster with the selected current image rows.

12. The one or more non-transitory computer-readable media according to claim 11, the operations further comprising, for each vertical segment, assigning each source pixel in the two clusters of source pixels to the top centroid or the bottom centroid based on the alignment.

13. The one or more non-transitory computer-readable media according to claim 12, wherein the two clusters of source pixels of are two first clusters of source pixels, and further comprising, in each vertical segment, retrieving two second clusters of source pixels from the first memory, and storing the two second clusters of source pixels in the second memory.

14. The one or more non-transitory computer-readable media according to claim 13, wherein the two second clusters of source pixels are selected based on vertical positions of the top centroid and the bottom centroid.

15. An apparatus, comprising:

a computer processor for executing computer program instructions; and
a non-transitory computer-readable memory storing computer program instructions executable by the computer processor to perform operations comprising:

receiving a current image frame;
retrieving a reference image from a first memory, including:

splitting the reference image into a set of vertical segments, and
in each vertical segment, retrieving two clusters of source pixels from the first memory and storing the two clusters of source pixels in a second memory;

generating, through interpolation, selected rows of an aligned image using the two clusters of source pixels from each vertical segment, wherein the selected rows of the aligned image are aligned with selected current image rows from the current image frame;

transmitting the selected rows of the aligned image to a multi-frame processing module;
transmitting the selected current image rows from the current image frame to the multi-frame processing module; and
generating an output image at the multi-frame processing module.

Deep Learning System
100

Image Registration
Module
120

Validation Module
140

Datastore
160

Interface Module
110

Training Module
130

Inference Module
150

FIG. 1

FIG. 2A

FIG. 2B

FIG. 2C

FIG. 3A

FIG. 3B

FIG. 3C

400

SINGLE-FRAME PROCESS 410

MAIN IMAGE 415

420

REFERENCE IMAGE 425

IMAGE WARPING 430

ALIGNED REFERENCE IMAGE 435

OPTICAL FLOW 440

MULTI-FRAME PROCESS 450

OUTPUT IMAGE 455

FIG. 4

EP 4 685 745 A1

23

FIG. 5A

FIG. 5B

EP 4 685 745 A1

600

RECEIVING AN IMAGE FRAME OF AN INPUT VIDEO
610

RETREIVING A REFERENCE IMAGE FROM A FIRST MEMORY IN BATCHES OF CONSECUTIVE ROWS
620

SPLITTING THE REFERNCE IMAGE INTO A SET OF VERTICAL SEGMENTS
630

IN EACH VERTICAL SEGMENT, RETRIEVING TWO CLUSTERS OF SOURCE PIXELS FROM THE FIRST MEMORY AND STORING THE TWO CLUSTERS OF SOURCE PIXELS IN A SECOND MEMORY
640

GENERATING SELECTED ROWS OF AN ALIGNED IMAGE USING THE TWO CLUSTERS OF SOURCE PIXELS FROM EACH VERTICAL SEGMENT, USING INTERPOLATION
650

TRANSMITTING THE SELECTED ROWS OF THE ALIGNED IMAGE TO A MULTI-FRAME PROCESSOR
660

ENTIRE REFERENCE IMAGE TRANSMITTED TO THE MULTI-FRAME PROCESSOR?
670

NO          YES

FIG. 6

```
┌────────────────────────────────────────────────────────────────────────────────────────┐  ⟋ 710
│              SPLIT THE REFERENCE IMAGE INTO A SET OF VERTICAL SEGMENTS                    │
└────────────────────────────────────────────────────────────────────────────────────────┘
                                           │
                                           ▼                                                   ⟋ 720
┌────────────────────────────────────────────────────────────────────────────────────────┐
│ FOR EACH VERTICAL SEGMENT, RETRIEVE TWO CLUSTERS OF SOURCE PIXELS FROM THE FIRST MEMORY   │
│ AND STORE THE TWO CLUSTERS OF SOURCE PIXELS IN A SECOND MEMORY, WHERE EACH CLUSTER OF     │
│ SOURCE PIXELS INCLUDES R ROWS OF THE RESPECTIVE VERTICAL SEGMENT                          │
└────────────────────────────────────────────────────────────────────────────────────────┘
                                           │
                                           ▼                                                   ⟋ 730
┌────────────────────────────────────────────────────────────────────────────────────────┐
│  DETERMINE THE CENTROIDS OF EACH CLUSTER OF SOURCE PIXELS IN EACH RESPECTIVE VERTICAL     │
│  SEGMENT                                                                                  │
└────────────────────────────────────────────────────────────────────────────────────────┘
                                           │
                                           ▼                                                   ⟋ 740
┌────────────────────────────────────────────────────────────────────────────────────────┐
│ FOR EACH VERTICAL SEGMENT, ASSIGN EACH SOURCE PIXEL IN THE SECOND MEMORY TO ONE OF THE    │
│ TWO CLUSTERS BY DETERMINING THE CLOSEST CENTROID                                          │
└────────────────────────────────────────────────────────────────────────────────────────┘
                                           │
                                           ▼                                                   ⟋ 750
┌────────────────────────────────────────────────────────────────────────────────────────┐
│ FOR EACH VERTICAL SEGMENT, DETERMINE A NEW VALUE OF EACH CENTROID BY DETERMINING THE MEAN │
│ VERTICAL COORDINATE OF THE SOURCE PIXELS ASSIGNED TO THE RESPECTIVE CLUSTER               │
└────────────────────────────────────────────────────────────────────────────────────────┘
```

IS THE CENTROID ABOVE THE CENTER OF ITS RESPECTIVE CLUSTER, BUT INSIDE THE CLUSTER? 760 — YES

NO

IS THE CENTROID BELOW THE CENTER OF ITS RESPECTIVE CLUSTER, BUT INSIDE THE CLUSTER? 770 — YES → ROLL DOWN THE CLUSTER BY RETRIEVING ADDITIONAL ROWS OF THE RESPECTIVE VERTICAL SEGMENT, SUCH THAT THE CENTER ALIGNS WITH THE CENTROID — 780

NO

RETRIEVE R ADDITIONAL ROWS OF THE VERTICAL SEGMENT SUCH THAT THE CENTROID IS AT THE CENTER OF THE R ADDITIONAL ROWS — 790

FIG. 7

EP 4 685 745 A1

COMPUTING DEVICE
800

| PROCESSING DEVICE 802 | COMMUNICATION CHIP 812 |
| MEMORY 804 | BATTERY/POWER 814 |
| DISPLAY DEVICE 806 | GPS DEVICE 816 |
| VIDEO OUTPUT DEVICE 808 | VIDEO INPUT DEVICE 818 |
| OTHER OUTPUT DEVICE 810 | OTHER INPUT DEVICE 820 |

ANTENNA
822

FIG. 8

EP 4 685 745 A1

## EUROPEAN SEARCH REPORT

**Application Number**

EP 25 19 0595

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 823 842 B2 (PANASONIC CORP [JP]) 2 September 2014 (2014-09-02) | 1,2, 8-10,15 | INV. G06T7/33 |
| A | * figures 2A, 2B * | 3-7, | G06T7/35 |
|  | * page 1, lines 25-31 * | 11-14 |  |
|  | * page 3, lines 19-24 * |  |  |
|  | * page 4, lines 7-13 * |  |  |
|  | * page 5, lines 17-21 * |  |  |
|  | ----- |  |  |
| A | US 4 503 456 A (NAKAMURA TAKASHI [JP] ET AL) 5 March 1985 (1985-03-05) | 1-15 |  |
|  | * abstract; figure 4 * |  |  |
|  | * page 1, lines 49-55 * |  |  |
|  | * page 2, lines 10-17 * |  |  |
|  | * page 7, lines 48-49 * |  |  |
|  | ----- |  |  |

**TECHNICAL FIELDS SEARCHED (IPC)**

G06T

The present search report has been drawn up for all claims

| Place of search | Date of completion of the search | Examiner |
|---|---|---|
| Munich | 8 December 2025 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0595

This annex lists the patent family members relating to the patent documents cited in  the above-mentioned European search report.
The members are as contained in the European Patent Office EDP file on
The European Patent Office is in no way liable for these particulars which are merely given for the purpose of information.

08-12-2025

| Patent document cited in search report | | Publication date | Patent family member(s) | | Publication date |
|---|---|---|---|---|---|
| US 8823842 | B2 | 02-09-2014 | JP | 2013218654 A | 24-10-2013 |
| | | | US | 2013242126 A1 | 19-09-2013 |
| US 4503456 | A | 05-03-1985 | AT | 388270 B | 26-05-1989 |
| | | | AU | 556362 B2 | 30-10-1986 |
| | | | CA | 1215774 A | 23-12-1986 |
| | | | DE | 3225629 A1 | 03-02-1983 |
| | | | FR | 2509558 A1 | 14-01-1983 |
| | | | GB | 2103450 A | 16-02-1983 |
| | | | JP | S587991 A | 17-01-1983 |
| | | | NL | 8202712 A | 01-02-1983 |
| | | | US | 4503456 A | 05-03-1985 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63675574